# EUROPEAN PATENT APPLICATION

(11) **EP 4 779 930 A1**
(43) Date of publication of application: **22.07.2026**
(21) Application number: 25152440.1
(22) Date of filing: 17.01.2025
(51) Int. Cl.: H04L 9/40, H04W 12/041, H04W 12/0431, H04W 12/0433, H04W 12/06, B60R 16/023

(54) **A SYSTEM, SUBSYSTEM, TRUSTED PROCESSOR AND METHOD**

(71) Applicant: NXP B.V., 5656 AG Eindhoven (NL)
(72) Inventor: COSTANTINI, Valerio, 5656 AG Eindhoven (NL); JANSSENS, Pieter Johan, 5656 AG Eindhoven (NL); FAY, Björn, 5656 AG Eindhoven (NL); BOEHL, Florian, 5656 AG Eindhoven (NL); GUSTIN, Matjaz, 5656 AG Eindhoven (NL)
(74) Representative: Krott, Michel

(57) **Abstract**

The present disclosure provides a trusted processor configured to provide for the pairing of a subsystem leader and a subsystem follower, the trusted processor configured to: receive, from the subsystem leader, a subsystem leader identifier and a subsystem follower identifier; generate a leader pairing material transport key (PMTK); transmit the leader PMTK to the subsystem leader; and transmit a derived PMTK to the subsystem follower, wherein the derived PMTK is derived based on the received subsystem follower identifier and the leader PMTK; wherein the transmitted leader PMTK and the derived PMTK are configured to be used by the subsystem leader and the subsystem follower to securely authenticate each other and, based on this authentication, set up respective long term pairing keys for ongoing communication therebetween. The disclosure also provides for a corresponding subsystem comprising the subsystem leader and the subsystem follower.

## Description

### Field

The present disclosure relates to system comprising a trusted processor and a subsystem and a method of operating the system to provide for the pairing of a subsystem leader and a subsystem follower.

### Summary

According to a first aspect of the present disclosure, there is provided a trusted processor configured to provide for the pairing of a subsystem leader and a subsystem follower, the trusted processor configured to:
receive, from the subsystem leader, a subsystem leader identifier configured to identify the subsystem leader and a subsystem follower identifier configured to identify the subsystem follower;
generate a leader pairing material transport key (PMTK);
transmit the leader PMTK to the subsystem leader; and
transmit a derived PMTK to the subsystem follower, wherein the derived PMTK is derived based on the received subsystem follower identifier and the leader PMTK;
wherein the transmitted leader PMTK and the derived PMTK are configured to be used by the subsystem leader and the subsystem follower to securely authenticate each other and, based on this authentication, set up respective long term pairing keys for ongoing communication therebetween.

In one or more embodiments, the trusted processor may be configured to provide for the pairing of the subsystem leader and a plurality of subsystem followers, the trusted processor configured to:
receive, from the subsystem leader, for each subsystem follower, a subsystem follower identifier configured to identify the subsystem follower;
transmit a derived PMTK to each subsystem follower, wherein each derived PMTK is derived based on: the received subsystem follower identifier of the subsystem follower to which it is being transmitted; and the leader PMTK,
wherein the transmitted leader PMTK and the derived PMTK are configured to be used by the subsystem leader and the subsystem follower to securely authenticate each other and, based on this authentication, set up respective long term pairing keys for ongoing communication therebetween.

In one or more embodiments, the subsystem leader may comprise an electronic control unit, which comprises an ECU processor, and an associated security subsystem wherein the ECU processor is configured to provide for control of the one or more subsystem followers and wherein the security subsystem is configured to provide for the implementation of one or more security functions.

In one or more embodiments, the or each subsystem follower may comprise an ultra-wideband, UWB, node.

In one or more embodiments, the processor may be configured to derive a response key (RSPK_{UWBi}) unique and specific to each subsystem follower based on a pre-shared key between the trusted processor and subsystem follower (K_{UWBi,TTP}) and a response salt and wherein the processor is further configured to generate an AEAD-Ciphertext based on the RSPK_{UWBi}, the PMTK_{UWBi}, the subsystem leader identifier, and the or each UWB-ID wherein the AEAD-Ciphertext is an authenticated encryption of the derived PMTK with associated data, wherein the associated data is the subsystem leader identifier and the or each subsystem follower identifier.

In one or more embodiments, the leader subsystem identifier and follower subsystem identifier may be received by way of the trusted processor and the subsystem leader operating according to a secure communication protocol.

In one or more embodiments, the trusted processor may be configured to verify that the subsystem leader and the or each of the subsystem followers are allowed to be paired together.

According to a second aspect of the present disclosure, there is provided a subsystem comprising a leader subsystem and a follower subsystem, wherein the subsystem follower is configured to provide a subsystem follower identifier to the subsystem leader in response to receiving a pairing initialisation instruction and wherein the subsystem leader is configured to provide a subsystem leader identifier and the received subsystem follower identifier to a trusted processor;
the subsystem leader is configured to receive, in response to sending the subsystem leader identifier and the subsystem follower identifier to the trusted processor, from the trusted processor a leader pairing material transport key (PMTK) and a derived PMTK, wherein the derived PMTK is derived based on the received subsystem follower identifier and the leader PMTK; and
wherein the subsystem leader and the subsystem follower are configured to securely authenticate each other based on the leader PMTK and the derived PMTK and, based on this authentication, set up respective long term pairing keys for ongoing communication therebetween.

In one or more embodiments, the subsystem may comprise a plurality of subsystem followers each configured to provide a respective subsystem follower identifiers to the subsystem leader in response to receiving respective pairing initialisation instructions and wherein the subsystem leader may be configured to provide the subsystem leader identifier and the received subsystem follower identifiers to a trusted processor;
wherein the subsystem leader is configured to receive, in response to sending the subsystem leader identifier and the subsystem follower identifier to the trusted processor, from the trusted processor a derived PMTK for each subsystem follower;
wherein the subsystem leader and each subsystem follower are configured to securely authenticate each other based on the leader PMTK and the respective PMTK and, based on this authentication, set up long term pairing keys for ongoing communication therebetween.

In one or more embodiments, to set up respective long term pairing keys for ongoing communication, the subsystem leader may be configured to:
derive the derived PMTK for the or each subsystem follower based on the leader PMTK and the respective subsystem follower identifier;
generate one or more Long Term Pairing Keys (LTPK);
send the or a plurality of LTPKs and the subsystem leader identifier to each respective subsystem follower, wherein for the or each subsystem follower, the corresponding LTPK is secured via the derived PMTK of that subsystem follower;
and wherein each subsystem follower is configured to:
establish communication with the subsystem leader using its respective derived PMTK received from the trusted processor, wherein the established communication is for exchanging LTPKs;
verify that the subsystem follower and the subsystem leader have the same LTPK or LTPKs via the established communication; and
if the verification is successful, store the subsystem leader identifier, and the or each received LTPK.

In one or more embodiments, one or both of:
a) the subsystem leader may be configured to generate a leader Unicast LTPK (leader ULTPK) used by the subsystem leader for one-to-one communication between the subsystem leader and the subsystem follower or one of the plurality of subsystem followers;
   wherein the subsystem leader may be further configured to derive a follower ULTPK for each subsystem follower wherein the follower ULTPK is based on the leader ULTPK and the respective subsystem follower identifier and wherein the follower ULTPK is used by the subsystem follower for one-to-one communication between the respective subsystem follower and the subsystem leader; and
   wherein each follower ULTPK may be the LTPK, or one of the LTPK, sent by the subsystem leader to its corresponding subsystem follower; and
b) the subsystem leader may be configured to generate a broadcast or multicast long term pairing key, BLTPK, configured to be used by the subsystem leader for one-to-many communication between the subsystem leader and the plurality of subsystem followers;
   wherein the BLTPK may be the LTPK, or one of the LTPKs, sent by the subsystem leader to the subsystem followers.

In one or more embodiments, the subsystem leader and the subsystem follower may be configured to verify whether they have the one or both of same BLTPK and ULTPK_{UWBi} by initiating communication therebetween using one or both of the respective BLTPK and the ULTPK_{UWBi}, and, if the communication is error free, the stored long term keys are the same.

According to a third aspect of the present disclosure, there is provided a system comprising the trusted processor of the first aspect and the subsystem of the second aspect.

According to a fourth aspect of the present disclosure, there is provided an automotive vehicle comprising the subsystem of the second aspect.

According to a fifth aspect of the present disclosure, there is provided a method of providing for the pairing of a subsystem leader and a subsystem follower comprising:
providing, by the subsystem follower, a subsystem follower identifier to the subsystem leader in response to receiving a pairing initialisation instruction
providing, by the subsystem leader, a subsystem leader identifier and the received subsystem follower identifier to a trusted processor;
receiving, at the trusted processor, from the subsystem leader, the subsystem leader identifier configured to identify the subsystem leader and the subsystem follower identifier configured to identify the subsystem follower;
generating, by the trusted processor, a leader pairing material transport key (PMTK);
transmitting, by the trusted processor, the leader PMTK to the subsystem leader; and
transmitting, by the trusted processor, a derived PMTK to the subsystem follower, wherein the derived PMTK is derived based on the received subsystem follower identifier and the leader PMTK, wherein the transmitted leader PMTK and the derived PMTK are configured to be used by the subsystem leader and the subsystem follower to securely authenticate each other and, based on this authentication, set up respective long term pairing keys for ongoing communication therebetween;
receiving, at the subsystem leader from the trusted processor, the leader pairing material transport key (PMTK) and the derived PMTK; and
securely authenticating the subsystem leader and the subsystem follower based on the leader PMTK and the derived PMTK and,
based on this authentication, setting up respective long term pairing keys for ongoing communication between the subsystem leader and the subsystem follower.

While the disclosure is amenable to various modifications and alternative forms, specifics thereof have been shown by way of example in the drawings and will be described in detail. It should be understood, however, that other embodiments, beyond the particular embodiments described, are possible as well. All modifications, equivalents, and alternative embodiments falling within the spirit and scope of the appended claims are covered as well.

The above discussion is not intended to represent every example embodiment or every implementation within the scope of the current or future Claim sets. The figures and Detailed Description that follow also exemplify various example embodiments. Various example embodiments may be more completely understood in consideration of the following Detailed Description in connection with the accompanying Drawings.

### Brief Description of the Drawings

One or more embodiments will now be described by way of example only with reference to the accompanying drawings in which:
Figure 1 shows a schematic diagram of a system of the present disclosure;
Figure 2 shows a protocol flow corresponding to the actions implemented by the in trusted processor and subsystem of the present disclosure;
Figure 3 shows an automotive vehicle comprising the subsystem of the present disclosure and a remote trusted processor; and
Figure 4 shows an example method of operating a system according to the present disclosure.

### Detailed Description

UWB anchors are typically installed at a vehicle's edge, and they communicate with a central electronic control unit (ECU) via an in-vehicle network. This communication can be easily spoofed, and a malicious actor may attempt to replace a legitimate Ultra-Wide Band (UWB) anchor with a crafted one to send distance measurements that could induce the central ECU to unlock doors or switch on the engine. For this reason, that communication must be secured.

Before vehicle assembly at a car manufacturing plant, it cannot be known which UWB anchors will be installed with which ECU (which will eventually contain a Secure Element), so it is not possible to pre-provision UWB anchors and the ECU with binding symmetric keys. However, it is possible to provision each component with a key used to securely communicate with a trusted third party (TTP) that is supposed to be the same for all components. Moreover, because UWB anchors are supposed to be installed at a vehicle's edge (e.g., behind the bumpers), they are susceptible to accidents that may require their replacement. Similarly, the ECU may need to be replaced because of malfunctions.

While the above details are provided in the context of vehicles, secure elements, ECUs and UWB anchors, it will be appreciated that the present disclosure may be implemented in other contexts, such as in industrial access settings or other settings.

The present disclosure provides for a trusted processor (which may be a trusted third party, TTP) to provide secure keys to a subsystem leader (which may be an ECU and associated secure element) and one or more subsystem followers (which may be UWB anchors) so that the subsystem leader and one or more subsystem followers can establish between themselves long term pairing keys.

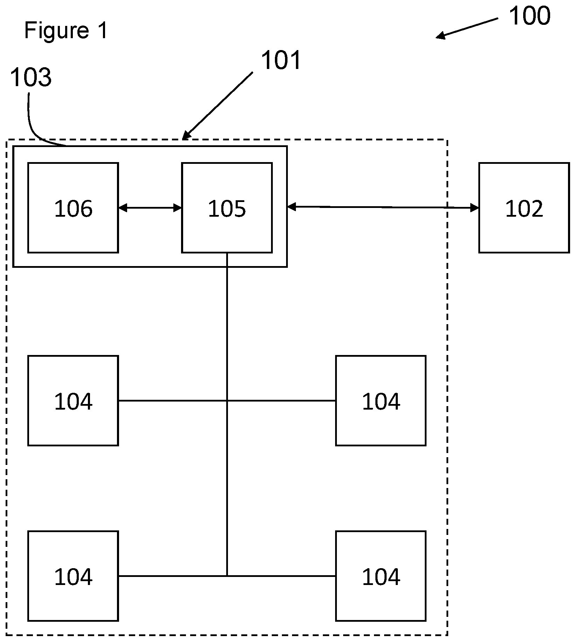

Figure 1 shows an example system of the present disclosure. The system comprises a subsystem 101 and a trusted processor 102.

The trusted processor 102 may be referred to as a trusted third party (TTP), but it will be appreciated that this may be any processor which is suitable for implementing the described system 100. The trusted processor 102 may be an entity which facilitates interactions between two parties who both trust the trusted processor 102. In this case, the trusted processor 102 may be trusted by components of the subsystem 101. In one or more embodiments, the trusted processor 102 may be a server in a cloud, a laptop of a technician, a mobile phone or other device.

The subsystem 101 comprises a subsystem leader 103 and, in this case, a plurality of subsystem followers 104. In one or more alternative embodiments, there may only be provided a single subsystem follower 104. One embodiment of the subsystem leader 103 may be an electronic control unit (ECU) including a processor 105 and an associated security subsystem 106 wherein the processor 105 is configured to provide for control of the one or more subsystem followers 104 and wherein the security subsystem 106 is configured to provide for the implementation of one or more security functions, such as cryptographic operations. The processor 105 may be configured to provide for the routing of one or more data signals between the security subsystem 106, the subsystem followers 104 and the trusted processor 102. In one or more embodiments, the security subsystem 106 may comprise one or more of: a pure-software implementation; a secure element; a hardware security engine; a trusted platform module; a trusted execution environment; a secure enclave; or another suitable electronic processing unit. Thus, where it is stated in the present disclosure that one or more messages or data are transmitted between components of the disclosure, then it may be the processor 105 which, to some extent, routes these messages or data.

It will be appreciated that a security subsystem may be implemented in multiple ways, such as in hardware, in software, in both hardware and software, or by combining existing security subsystem embodiments. It will also be appreciated that the operations performed by the security subsystem 106 described within the context provided by this detailed description may alternatively be performed by the processor 105 without the need of a security subsystem 106, wherein the processor 105 can perform the same operations of the security subsystem 106 at the cost of lowering the assurance of the security claims associated to the implementation.

The or each subsystem follower 104 may be a ultra-wideband (UWB) node, however, in other embodiments, the subsystem follower 104 may be a suitable device which needs to pair with a subsystem leader 103 with which it does not have a pre-existing trusted relationship.

The goal of the system 100 is to pair the subsystem leader 103 with the or each subsystem follower 104 so that they can trust each other (pairwise subsystem follower-subsystem leader), mutually authenticate, and have the means to communicate securely (with confidentiality, mutual authentication and freshness) with each other onwards at run-time. The system achieves this by having the parties agree pair-wise on symmetric long term pairing keys (LTPKs). In particular, they will use these pairing keys to exchange UWB ranging secret keys and UWB ranging results or any other confidential application data securely later on. With this system 100, the LTPKs to be installed on the subsystem leader 103 and the subsystem followers 104 are generated on the subsystem leader 103 and then shared to the subsystem followers 104 "wrapped" in pairing material transport keys (PMTKs) provided to both the subsystem followers 104 and subsystem leader 103 by the trusted processor 102.

The system 100 can be considered to go through several broad stages:
1. The subsystem leader 103 collects information and requests from all subsystem followers 104;
2. The subsystem leader 103 asks the trusted processor 102 for pairing authorisation, forwarding the subsystem followers' 104 requests;
3. The trusted processor 102 generates pairing material transport keys (PMTKs) for the subsystem leader 103 and for each subsystem follower 104;
4. The trusted processor 102 provides the PMTKs to the subsystem leader 103; and
5. The subsystem leader 103 distributes the appropriate PMTK to each subsystem follower 104 and, using these, they agree on long term pairing keys (LTPKs).

It can be noted that several of these steps may be performed with a noticeable delay between them. For example, the delay may be several minutes, hours, days or longer. This allows for different needs of the assembly and testing process when an overall product that comprises the system is being assembled. Further, the communication between subsystem leader 103 and the subsystem followers 104 can operate in an offline manner, that is without requiring a connection to the trusted processor 102 and the trusted processor 102 and the subsystem leader 103 being active at the same time, the latter being required only for steps 2, 3, and 4.

The following properties may be desirable for the system 100 and associated protocol. It may be desirable that the system 100 and protocol have "freshness", which is to say that it may not be possible to renegotiate twice the same LTPKs. It may be desirable that the system 100 and protocol provide for mutual authentication such that both the subsystem leader 103 and the subsystem follower or followers 104 prove their identify to the trusted processor 102 and vice versa the trusted processor 102 proves its identity to them. This may prevent replacement of any of the two parties with an unauthorised device. Finally, it may be desirable that the system 100 and protocol are scalable in that the trusted processor 102 may be queried as little as possible to reduce its load and bottleneck when multiple pairings happen simultaneously. This may assist when an initial device, such as a vehicle, comprising the subsystem 101 is assembled and a plurality of subsystem followers 104 need to establish trusted communication with the subsystem leader 103.

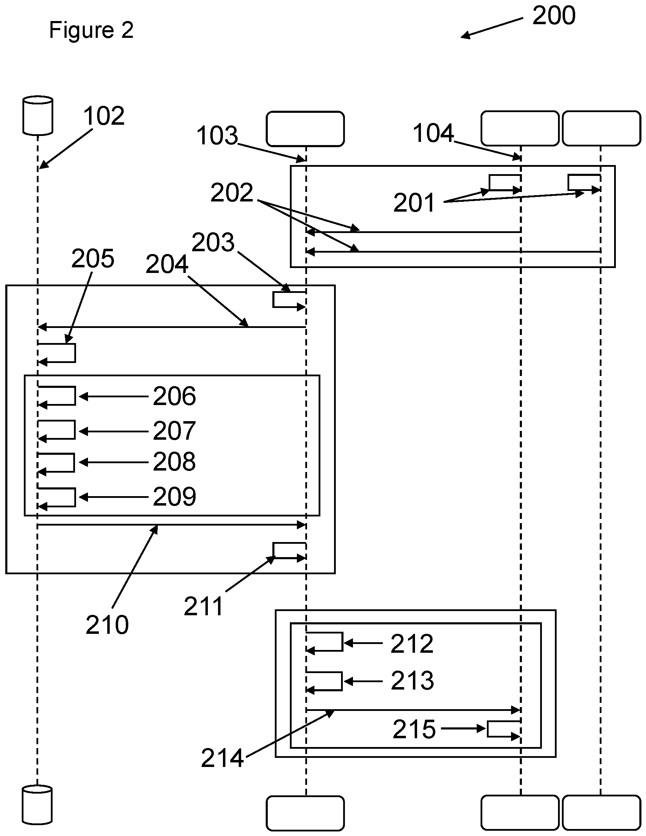

Figure 2 shows a protocol flow 200 corresponding to the present disclosure using a diagram layout based on the UML Sequence diagrams. Each vertical line represents one of the components of the system including the trusted processor 102, the subsystem leader 103 and, in this case, a first and n^{th} subsystem follower 104. It will be appreciated that "n" here may be any number from 0 onwards. An arrow pointing from one component to another indicates the transmission of data from the first component to the second. An arrow pointing from a component to back to itself indicates an action taken by the component which does not result in data leaving that component.

The process may be initiated by the or each subsystem follower 104 receiving a pairing initialisation instruction. The instruction may be received from any suitable source which may be from the trusted processor 102, the subsystem leader 103 or from another source. In response to the pairing initialisation instruction, the subsystem follower 104 is configured to generate 201 a subsystem follower identifier and provide 202 the subsystem follower identifier to the subsystem leader 103. In other examples, the subsystem followers may already have subsystem follower identifiers, and so only the step of providing 202 these subsystem follower identifiers to the subsystem leader 103 may be necessary. The or each subsystem follower identifier may be any suitable value, may have an arbitrary field. This subsystem follower identifier for the i^{th} subsystem follower may be written as ID_{UWBi}. The subsystem follower identifier may be stored in memory of the subsystem follower 104, such as in a non-volatile memory. The subsystem follower 104 may also generate a random session nonce which is used to prove that the trusted processor's 102 response to the subsystem follower 104 is fresh (which can help to avoid replay attacks). The subsystem follower 104 may store the random session nonce in non-volatile memory until the trusted processor's 102 response is received.

The subsystem leader 103 is also configured to generate 203 a subsystem leader identifier or use a pre-existing subsystem leader identifier. The subsystem leader identifier may be any suitable value. The subsystem leader identifier may also have an arbitrary field size. The subsystem leader identifier may be written as ID_{SE}. The subsystem leader identifier may be stored in memory of the subsystem leader 103, such as in a non-volatile memory. The subsystem leader 103 is configured to provide 204 the subsystem leader identifier and the or each received subsystem follower identifier to the trusted processor 102. The subsystem leader 103 and the trusted processor 102 may be configured to establish secure communication which secures data exchanged therebetween. This secure communication may be used for the transmission of the subsystem leader identifier and the or each subsystem follower identifier. Any suitable secure communication protocol may be used for this, such as via Secure Copy Protocol (SCP), Transport Layer Security (TLS) or another suitable communication method.

Upon receipt of the subsystem leader identifier, which is configured to identify the subsystem leader 103, and the or each subsystem follower identifier, which is configured to identify the or each subsystem follower 104, the trusted processor 102 is configured to generate 205 a leader pairing material transport key (leader PMTK). The leader PMTK may not be stored by the trusted processor 102. The leader PMTK may be a random pairing material transport key and may be, by way of example only, a 256-bit pairing material transport key. It will be appreciated that other lengths may be possible.

The trusted processor 102 may be configured to generate 206 a derived PMTK (PMTK_{UWBi}) for each subsystem follower 104, wherein the or each derived PMTK is derived based on the corresponding received subsystem follower identifier and the leader PMTK. Thus, the PMTK_{UWBi} may be a pseudo-random number derivation of a random number and the PMTK is a random number.

The trusted processor 102 may further be configured to generate 207 a random response salt for each subsystem follower 104. The trusted processor 102 may be further configured to derive 208 a response key (PSPK_{UWBi}) unique and specific to each subsystem follower 104 based on the salt 207, and a pre-shared key (K_{UWBi}) between the trusted processor 102 and the subsystem follower 104.

The trusted processor 102 may be further configured to generate 209 an Authenticated and Encrypted with Associated Data (AEAD)-Ciphertext for each subsystem follower 104 based on the RSPK_{UWBi}, the PMTK_{UWBi}, the subsystem leader identifier and the corresponding subsystem follower identifier. The AEAD-Ciphertext may be an authenticated encryption of the derived PMTK with associated data, wherein the encryption key PSPK_{UWBi} and the associated data is the subsystem leader identifier and the corresponding subsystem follower identifier. The AEAD-Ciphertext may further be based on the corresponding nonce of the corresponding subsystem follower 104 received from the subsystem follower via the subsystem leader 103. It can be seen that the steps 206, 207, 208 and 209 have been placed inside a box in figure 2. This box represents that this set of steps is repeated for each subsystem follower.

The trusted processor 102 may further log the paired devices of the system 100 by logging their corresponding received identifiers.

The trusted processor 102 may also be configured to verify that the subsystem leader 103 and the or each of the subsystem followers 104 are allowed to be paired together. This may be performed in any of a plurality of ways. For example, by ensuring that the subsystem leader 103 and subsystem followers 104 are being installed in the same macrodevice, such as a vehicle, or by verifying the identifiers of the subsystem leader 103 and subsystem followers 104 against an external database of identifiers.

The trusted processor 102 is further configured to transmit 210 the leader PMTK to the subsystem leader 103. The trusted processor 102 is also configured to transmit 210 the or each derived PMTK to its corresponding subsystem follower 104, i.e., to the subsystem follower 104 which provided the subsystem follower identifier that was used to generate that specific derived PMTK. The transmission 210 of the or each derived PMTK to its corresponding subsystem follower 104 may be provided via the subsystem leader 103. That is, the derived PMTKs may be provided to the subsystem leader for subsequent transmission to the subsystem followers. The or each derived PMTK may be provided as part of the generated AEAD-Ciphertext. In one or more embodiments, the subsystem leader 103 may be unable to decrypt the or each derived PMTK. The transmission of the leader PMTK and the follower PMTK may be done via the previously established secure communication protocol. The leader PMTK and the follower PMTK may be provided 210 to the subsystem leader 103 by the trusted processor 102 in the same message.

The subsystem leader 103 and the or each subsystem follower 104 are configured to securely authenticate each other based on the leader PMTK and the derived PMTK and, based on this authentication, set up respective long term pairing keys, LTPKs, for ongoing communication therebetween. That is, the subsystem leader 103 is configured to establish LTPKs with each subsystem follower 104. The leader PMTK and the derived PMTKs provide a common key to the subsystem leader 103 and to each subsystem follower 104 for the setup of LTPKs. In particular, the leader PMTK and the derived PMTKs may provide a common key to enable a key agreement of LTPKs.

In order to set up respective long term pairing keys, LTPKs, for ongoing communication, the subsystem leader 103 may be configured to independently derive 212 the derived PMTK for the or each subsystem follower 104 based on the leader PMTK and the respective subsystem follower identifier ID_{UWBi}. That is, the subsystem leader 103 derives 212 the derived PMTK itself, rather than decrypting the derived PMTK received from the trusted processor 102.

The subsystem leader 103 further generates 211 and stores one or more LTPKs. The or a plurality of LTPKs and the subsystem leader identifier are sent 214 to the or each respective subsystem follower 104. For the or each subsystem follower 104, the corresponding LTPK may be secured via the derived PMTK of that subsystem follower 104. Upon receiving its secured LTPK, a subsystem follower 104 is configured to establish communication with the subsystem leader 103 using its respective derived PMTK received from the trusted processor 102, wherein the established communication is for exchanging LTPKs. The secured LTPK and derived PMTK may be provided 214 to the subsystem follower 104 in the same message. The subsystem follower 104 is then configured to verify that the subsystem follower 104 and the subsystem leader 103 have the same LTPK or LTPKs via the established communication. Verification that the subsystem leader 103 and subsystem follower 104 have the same LTPK or LTPKs may be achieved by initiating a new communication between the two, such as by initiating a new secure session to exchange arbitrary application data, which may be, by way of example only, a version number of each device. If this communication is initiated successfully, then it is confirmed that the subsystem leader 103 and the subsystem follower 104 have the same LTPK or LTPKs. There may be no need to exchange additional messages for the purposes of establishing verification. Finally, if the verification is successful, the subsystem follower 104 is configured to store 215 the or each received LTPK. The subsystem follower 104 may also be configured to store the subsystem leader 103 identifier.

In systems 100 with a plurality of subsystem followers 104, or systems 100 which may at some point have a plurality of subsystem followers 104, it may be desirable to have two types of LTPKs. A first LTPK may be a unicast LTPK which is used by the subsystem leader 103 for sending messages to a single specific subsystem follower 104. The unicast LTPK may be unique, or at least individually generated, for each subsystem follower 104. The second LTPK may be a broadcast or multicast LTPK which is used by the subsystem leader 103 for broadcasting or multicasting messages broadly to a plurality of subsystem followers 104.

The subsystem leader 103 may be configured to generate a leader unicast LTPK (leader ULTPK) which is configured to be used by the subsystem leader for one--to-one communication between the subsystem leader and the subsystem follower or one of the plurality of subsystem followers. The subsystem leader may be further configured to derive 213 a follower ULTPK for each subsystem follower 104 wherein the follower ULTPK is based on the leader ULTPK and the respective subsystem follower identifier. The follower ULTPK may be used by the subsystem follower 104 for one-to-one communication between the respective subsystem follower 104 and the subsystem leader 103. Each ULTPK may be the LTPK, or one of the LTPKs, sent 214 by the subsystem leader 103 to its corresponding subsystem follower 104.

The subsystem leader 103 may also be configured to generate a broadcast (or multicast) LTPK (BLTPK) configured to be used by the subsystem leader 103 for one-to-many communication between the subsystem leader and the plurality of subsystem followers 104. The BLTPK may be the LTPK, or one of the LTPKs, sent by the subsystem leader 103 to the or each subsystem follower 104.

The subsystem leader 103 and the subsystem follower 104 may be configured to verify whether they have the one or both of the same BLTPK and ULTPK by initiating communication therebetween using one or both of the respective BLTPK and the ULTPK and, if the communication is error free, the stored long term pairing keys are valid, as described more generally above.

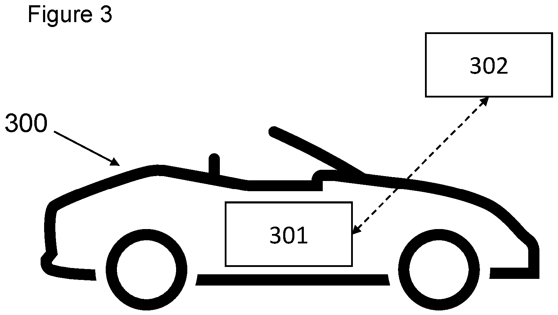

Figure 3 shows an example automotive vehicle 300 which comprises a subsystem 301 according to the present disclosure and a remote trusted processor 302. As mentioned previously, it will be appreciated that an automotive vehicle 300 may not be the only use case for the present system. Other use cases might be access control systems for buildings or areas (gates, turnstiles), smart home local network of devices, industrial networks of devices (e.g., IoT sensors across a building), smart city IoT devices, and in general other networks of connected devices that need to authenticate each other.

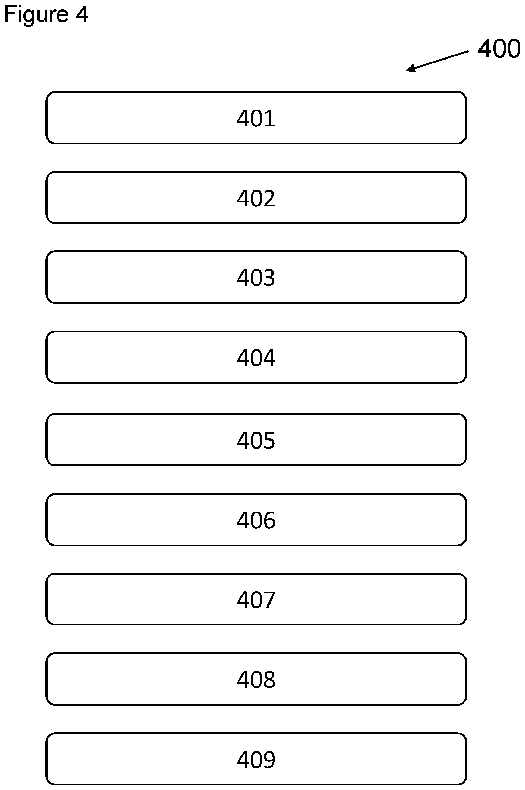

Figure 4 shows a method 400 of providing for the pairing of a subsystem leader and a subsystem follower according to the present disclosure. The method comprises:
providing 401, by the subsystem follower, a subsystem follower identifier to the subsystem leader in response to receiving a pairing initialisation instruction
providing 402, by the subsystem leader, a subsystem leader identifier and the received subsystem follower identifier to a trusted processor;
receiving 403, at the trusted processor, from the subsystem leader, the subsystem leader identifier configured to identify the subsystem leader and the subsystem follower identifier configured to identify the subsystem follower;
generating 404, by the trusted processor, a leader pairing material transport key (PMTK);
transmitting 405, by the trusted processor, the leader PMTK to the subsystem leader; and
transmitting 406, by the trusted processor, a derived PMTK to the subsystem follower, wherein the derived PMTK is derived based on the received subsystem follower identifier and the leader PMTK, wherein the transmitted leader PMTK and the derived PMTK are configured to be used by the subsystem leader and the subsystem follower to securely authenticate each other and, based on this authentication, set up respective long term pairing keys for ongoing communication therebetween;
receiving 407, at the subsystem leader from the trusted processor, the leader pairing material transport key (PMTK) and the derived PMTK; and
securely authenticating 408 the subsystem leader and the subsystem follower based on the leader PMTK and the derived PMTK and,
based on this authentication, setting up 409 respective long term pairing keys for ongoing communication between the subsystem leader and the subsystem follower.

It will be appreciated that the method may comprise additional steps which correspond to any of the functionality of the system, subsystem and trusted processor described above.

The instructions and/or flowchart steps in the above figures can be executed in any order, unless a specific order is explicitly stated. Also, those skilled in the art will recognize that while one example set of instructions/method has been discussed, the material in this specification can be combined in a variety of ways to yield other examples as well, and are to be understood within a context provided by this detailed description.

In some example embodiments the set of instructions/method steps described above are implemented as functional and software instructions embodied as a set of executable instructions which are effected on a computer or machine which is programmed with and controlled by said executable instructions. Such instructions are loaded for execution on a processor (such as one or more CPUs). The term processor includes microprocessors, microcontrollers, processor modules or subsystems (including one or more microprocessors or microcontrollers), or other control or computing devices. A processor can refer to a single component or to plural components.

In other examples, the set of instructions/methods illustrated herein and data and instructions associated therewith are stored in respective storage devices, which are implemented as one or more non-transient machine or computer-readable or computer-usable storage media or mediums. Such computer-readable or computer usable storage medium or media is (are) considered to be part of an article (or article of manufacture). An article or article of manufacture can refer to any manufactured single component or multiple components. The non-transient machine or computer usable media or mediums as defined herein excludes signals, but such media or mediums may be capable of receiving and processing information from signals and/or other transient mediums.

Example embodiments of the material discussed in this specification can be implemented in whole or in part through network, computer, or data based devices and/or services. These may include cloud, internet, intranet, mobile, desktop, processor, look-up table, microcontroller, consumer equipment, infrastructure, or other enabling devices and services. As may be used herein and in the claims, the following non-exclusive definitions are provided.

In one example, one or more instructions or steps discussed herein are automated. The terms automated or automatically (and like variations thereof) mean controlled operation of an apparatus, system, and/or process using computers and/or mechanical/electrical devices without the necessity of human intervention, observation, effort and/or decision.

It will be appreciated that any components said to be coupled may be coupled or connected either directly or indirectly. In the case of indirect coupling, additional components may be located between the two components that are said to be coupled.

In this specification, example embodiments have been presented in terms of a selected set of details. However, a person of ordinary skill in the art would understand that many other example embodiments may be practiced which include a different selected set of these details. It is intended that the following claims cover all possible example embodiments.

## Claims

1. A trusted processor configured to provide for the pairing of a subsystem leader and a subsystem follower, the trusted processor configured to:
receive, from the subsystem leader, a subsystem leader identifier configured to identify the subsystem leader and a subsystem follower identifier configured to identify the subsystem follower;
generate a leader pairing material transport key (PMTK);
transmit the leader PMTK to the subsystem leader; and
transmit a derived PMTK to the subsystem follower, wherein the derived PMTK is derived based on the received subsystem follower identifier and the leader PMTK;
wherein the transmitted leader PMTK and the derived PMTK are configured to be used by the subsystem leader and the subsystem follower to securely authenticate each other and, based on this authentication, set up respective long term pairing keys for ongoing communication therebetween.

2. The trusted processor of claim 1 configured to provide for the pairing of the subsystem leader and a plurality of subsystem followers, the trusted processor configured to:
receive, from the subsystem leader, for each subsystem follower, a subsystem follower identifier configured to identify the subsystem follower;
transmit a derived PMTK to each subsystem follower, wherein each derived PMTK is derived based on: the received subsystem follower identifier of the subsystem follower to which it is being transmitted; and the leader PMTK,
wherein the transmitted leader PMTK and the derived PMTK are configured to be used by the subsystem leader and the subsystem follower to securely authenticate each other and, based on this authentication, set up respective long term pairing keys for ongoing communication therebetween.

3. The trusted processor of any preceding claim, wherein subsystem leader comprises an electronic control unit, which comprises an ECU processor, and an associated security subsystem wherein the ECU processor is configured to provide for control of the one or more subsystem followers and wherein the security subsystem is configured to provide for the implementation of one or more security functions.

4. The trusted processor of any preceding claim wherein the or each subsystem follower comprises an ultra-wideband, UWB, node.

5. The trusted processor of any preceding claim wherein the processor is configured to derive a response key (RSPK_{UWBi}) unique and specific to each subsystem follower based on a pre-shared key between the trusted processor and subsystem follower (K_{UWBi,TTP}) and a response salt and wherein the processor is further configured to generate an AEAD-Ciphertext based on the RSPK_{UWBi}, the PMTK_{UWBi}, the subsystem leader identifier, and the or each UWB-ID wherein the AEAD-Ciphertext is an authenticated encryption of the derived PMTK with associated data, wherein the associated data is the subsystem leader identifier and the or each subsystem follower identifier.

6. The trusted processor of any preceding claim wherein the leader subsystem identifier and follower subsystem identifier are received by way of the trusted processor and the subsystem leader operating according to a secure communication protocol.

7. The trusted processor of any preceding claim wherein the trusted processor is configured to verify that the subsystem leader and the or each of the subsystem followers are allowed to be paired together.

8. A subsystem comprising a leader subsystem and a follower subsystem, wherein the subsystem follower is configured to provide a subsystem follower identifier to the subsystem leader in response to receiving a pairing initialisation instruction and wherein the subsystem leader is configured to provide a subsystem leader identifier and the received subsystem follower identifier to a trusted processor;
the subsystem leader is configured to receive, in response to sending the subsystem leader identifier and the subsystem follower identifier to the trusted processor, from the trusted processor a leader pairing material transport key (PMTK) and a derived PMTK, wherein the derived PMTK is derived based on the received subsystem follower identifier and the leader PMTK; and
wherein the subsystem leader and the subsystem follower are configured to securely authenticate each other based on the leader PMTK and the derived PMTK and, based on this authentication, set up respective long term pairing keys for ongoing communication therebetween.

9. The subsystem of claim 8 comprising a plurality of subsystem followers each configured to provide a respective subsystem follower identifiers to the subsystem leader in response to receiving respective pairing initialisation instructions and wherein the subsystem leader is configured to provide the subsystem leader identifier and the received subsystem follower identifiers to a trusted processor;
wherein the subsystem leader is configured to receive, in response to sending the subsystem leader identifier and the subsystem follower identifier to the trusted processor, from the trusted processor a derived PMTK for each subsystem follower;
wherein the subsystem leader and each subsystem follower are configured to securely authenticate each other based on the leader PMTK and the respective PMTK and, based on this authentication, set up long term pairing keys for ongoing communication therebetween.

10. The subsystem of any of claims 8 - 9 wherein to set up respective long term pairing keys for ongoing communication, the subsystem leader is configured to:
derive the derived PMTK for the or each subsystem follower based on the leader PMTK and the respective subsystem follower identifier;
generate one or more Long Term Pairing Keys (LTPK);
send the or a plurality of LTPKs and the subsystem leader identifier to each respective subsystem follower, wherein for the or each subsystem follower, the corresponding LTPK is secured via the derived PMTK of that subsystem follower;
and wherein each subsystem follower is configured to:
establish communication with the subsystem leader using its respective derived PMTK received from the trusted processor, wherein the established communication is for exchanging LTPKs;
verify that the subsystem follower and the subsystem leader have the same LTPK or LTPKs via the established communication; and
if the verification is successful, store the subsystem leader identifier, and the or each received LTPK.

11. The subsystem of claim 10 wherein one or both of:
a) the subsystem leader is configured to generate a leader Unicast LTPK (leader ULTPK) used by the subsystem leader for one-to-one communication between the subsystem leader and the subsystem follower or one of the plurality of subsystem followers;
wherein the subsystem leader is further configured to derive a follower ULTPK for each subsystem follower wherein the follower ULTPK is based on the leader ULTPK and the respective subsystem follower identifier and wherein the follower ULTPK is used by the subsystem follower for one-to-one communication between the respective subsystem follower and the subsystem leader; and
wherein each follower ULTPK is the LTPK, or one of the LTPK, sent by the subsystem leader to its corresponding subsystem follower; and
b) the subsystem leader is configured to generate a broadcast or multicast long term pairing key, BLTPK, configured to be used by the subsystem leader for one-to-many communication between the subsystem leader and the plurality of subsystem followers;
wherein the BLTPK is the LTPK, or one of the LTPKs, sent by the subsystem leader to the subsystem followers.

12. The subsystem of claim 11 wherein the subsystem leader and the subsystem follower are configured to verify whether they have the one or both of same BLTPK and ULTPK_{UWBi} by initiating communication therebetween using one or both of the respective BLTPK and the ULTPK_{UWBi}, and, if the communication is error free, the stored long term keys are the same.

13. A system comprising the trusted processor of any of claims 1 - 7 and the subsystem of any of claims 8 - 12.

14. An automotive vehicle comprising the subsystem of any of claims 8 - 12.

15. A method of providing for the pairing of a subsystem leader and a subsystem follower comprising:
providing, by the subsystem follower, a subsystem follower identifier to the subsystem leader in response to receiving a pairing initialisation instruction
providing, by the subsystem leader, a subsystem leader identifier and the received subsystem follower identifier to a trusted processor;
receiving, at the trusted processor, from the subsystem leader, the subsystem leader identifier configured to identify the subsystem leader and the subsystem follower identifier configured to identify the subsystem follower;
generating, by the trusted processor, a leader pairing material transport key (PMTK);
transmitting, by the trusted processor, the leader PMTK to the subsystem leader; and
transmitting, by the trusted processor, a derived PMTK to the subsystem follower, wherein the derived PMTK is derived based on the received subsystem follower identifier and the leader PMTK, wherein the transmitted leader PMTK and the derived PMTK are configured to be used by the subsystem leader and the subsystem follower to securely authenticate each other and, based on this authentication, set up respective long term pairing keys for ongoing communication therebetween;
receiving, at the subsystem leader from the trusted processor, the leader pairing material transport key (PMTK) and the derived PMTK; and
securely authenticating the subsystem leader and the subsystem follower based on the leader PMTK and the derived PMTK and,
based on this authentication, setting up respective long term pairing keys for ongoing communication between the subsystem leader and the subsystem follower.
